**Europäisches Patentamt**

**European Patent Office**

**Office européen des brevets**

(19)

(11) Numéro de publication: **0 187 590**

**B1**

# FASCICULE DE BREVET EUROPÉEN

(12)

(45) Date de publication du fascicule du brevet:
21.09.88

(21) Numéro de dépôt: **85402529.3**

(22) Date de dépôt: **18.12.85**

(51) Int. Cl.⁴: **B 64 C 27/46**

(54) **Pale pour rotor d'hélicoptère en matériau composite multilongeron à caissons de torsion et son procédé de fabrication.**

(30) Priorité: **19.12.84 FR 8419432**

(43) Date de publication de la demande:
**16.07.86 Bulletin 86/29**

(45) Mention de la délivrance du brevet:
**21.09.88 Bulletin 88/38**

(84) Etats contractants désignés:
**DE GB IT NL**

(56) Documents cité:
**FR-A-2 305 343**
**US-A-3 484 174**
**US-A-3 782 856**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Bost, Michel, 33, Avenue des Platanes, F-94340 Joinville- Le- Pont (FR)**

(74) Mandataire: **Lepeudry- Gautherat, Thérèse, ARMENGAUD JEUNE CABINET LEPEUDRY 6, rue du Fg. St- Honoré, F-75008 Paris (FR)**

EP 0 187 590 B1

LIBER, STOCKHOLM 1988

## Description

L'invention concerne une pale en matériau composite pour rotor d'hélicoptère dont la structure est particulièrement bien adaptée aux sollicitations tant en flexion qu'en torsion et qui de plus est redondante: cette qualité permet de conserver i'intégralité de fonctionnement après un endommagement structural. Ce type de structure est également bien adapté aux pales dont l'emplanture est "à fourche".

On sait en effet que pour constituer l'emplanture des pales et leur attache aux articulations du moyeu qui autorisent les mouvements angulaires desdites pales en incidence, battement et traînée, particulièrement quand ces articulations sont constituées par un corps élastique déformable angulairement, connu sous le nom de butée sphérique lamifiée et tel que décrit dans le FR-A-2 427 251 déposé le 2 juin 1978 au nom de la Demanderesse, il est avantageux que le pied de pale comporte deux branches formant une fourche dont l'extrémité est directement boulonnée sur l'armature interne de la butée sphérique lamifiée. Ce type de construction apporte d'une part une simplification de la construction du rotor et son allègement par la réduction du nombre de pièces constitutives, et d'autre part, permet le rapprochement de la liaison pale/moyeu du centre d'oscillation de la pale, ce qui a pour conséquence une réduction importante des efforts dynamiques appliqués à l'attache. Ceci donne à cet organe une meilleure tenue à la fatigue et une durée de vie non limitée.

Par ailleurs on connaît des pâles à caissons comportant soit un unique caisson au voisinage du bord d'attaque soit un caisson multiple tel que montré dans le document US-A-3 484 174 correspondent aux caractéristiques selon les préambules des revendications 1 et 6. Le principal avantage de ces pales réside dans leur très grande rigidité en torsion permettant notamment d'éliminer les vibrations nées d'un couplage entre les déformations de flexion et de torsion de la pale. Cependant, et plus spécialement dans le cas d'une pale présentant une fourche d'attache, leur réalisation devient complexe tout en ne donnant pas entière satisfaction en ce qui concerne la résistance de la zone de liaison de la partie courante de la structure à l'emplanture à fourche.

En effet une structure à un seul caisson devant se diviser en deux caissons pour former les deux branches de la fourche présente une discontinuité dans la zone de transition qui est très défavorable pour le passage des efforts de torsion en particulier. Pour les structures à caisson multiple dans le sens de la corde, il est impossible de les prolonger en caissons de branches de fourches sans solution de continuité brusque d'au moins un caisson, d'où également une zone de transition affaiblie. Bien entendu on remédie à cet affaiblissement par la mise en place de renforts, nervures, frettes et autres moyens pour tenter de reconstituer une structure continue mais cela entraîne une grande complication de fabrication. Il s'ensuit que les pales à fourche et à caisson sont pratiquement impossible à fabriquer de manière simple donc économique.

La présente invention entend remédier à ces inconvénients en proposant une pale dans laquelle l'ossature résistante est conformée en deux caissons superposés dans le sens de l'épaisseur de la pale afin qu'ils puissent se prolonger de manière naturelle et sans solution de continuité en armature pour les branches de la fourche d'attache de la pale au moyeu de rotor.

Plus précisément l'invention a pour premier objet une pale en matériau composite pour rotor d'hélicoptère constituée au voisinage de son bord d'attaque par une ossature résistante en caissons sensiblement centrée au quart avant de sa section courante transversale.

Selon l'une des caractéristiques principales de l'invention, cette ossature comprend deux caissons longitudinaux superposés, chacun d'eux étant constitué par un premier faisceau de stratifils formant un longeron avant et par un second faisceau de stratifils formant un longeron arrière, par un noyau de remplissage en matériau léger disposé entre les deux longerons et par une enveloppe renfermant longerons et noyau comprenant au moins une couche de tissus en fibres parallèles, disposées en biais par rapport à l'axe longitudinal de la pale, de manière à former un caisson de torsion, les deux caissons étant solidarisés par polymérisation simultanée des parties superposées et jointives de leur enveloppe respective.

Outre l'avantage de cette disposition concernant la réalisation simple des branches de la fourche qui sera expliquée en détail ci-après, cette structure comporte un second avantage en ce qui concerne la sécurité en cas d'avarie ou de défaillance (caractère fail safe) de la pale provoquée par l'impact d'un projectile. Cet avantage est important pour des pales équipant des hélicoptères à usage militaire. En effet le projectile tel qu'une balle possédera dans la quasi totalité des cas une trajectoire ascendante puisque tiré du sol. L'impact du projectile sera donc situé dans le caisson inférieur. Il est certain que dans la zone d'impact la résistance en torsion du caisson inférieur sera très diminuée. Il restera cependant une résistance à la torsion importante conservée par le caisson supérieur qui reste bien réparti de part et d'autre de l'axe de pas classiquement situé sensiblement au quart avant de la section de la pale. Cette résistance est en outre confortée par le fait que la structure possède quatre longerons formant en tout état de cause une armature également bien répartie autour de l'axe de pas. Ce n'est pas le cas d'une structure en monocaisson, où la raideur en torsion devient pratiquement nulle dans la zone d'impact, ni le cas d'une structure multicaisson dans le sens de la corde de la pale où, bien qu'une raideur résiduelle soit conservée dans la zone d'impact pour le caisson non atteint, il y a déplacement de la zone résistante par rapport à l'axe de pas et changement important de la répartition des contraintes.

Par ailleurs, toujours en cas d'impact, la rupture d'un caisson dans la zone d'impact ne provoque un déplacement du centre de cisaillement de la section que dans le sens vertical en direction du second caisson si bien que les efforts aérodynamiques passent toujours au très proche voisinage de ce centre de cisaillement ce qui évite la création de couplages pouvant engendrer des vibrations dangereuses.

D'une manière générale, le caractère "fail safe" de la partie courante de la pale est amélioré par la multiplication des liaisons entre caissons et longerons et la qualité de ces liaisons qui résulte de la compatibilité des matériaux employés (tissus, stratifils, résines) autorisant une polymérisation en bloc dans un moule unique, sans emploi de films de colle rajoutés.

Selon une autre caractéristique de l'invention, le pied de pale étant prolongé par une emplanture en forme de fourche à deux branches, l'armature de chaque branche de la fourche est constituée par l'extrémité des longerons de chaque caisson, l'extrémité des longerons du caisson supérieur divergeant angulairement de l'extrémité des longerons du caisson inférieur, à une distance appropriée des extrémités des branches de ladite fourche, de part et d'autre d'un matériau de remplissage en forme de coin. On assure de manière naturelle et aisée la continuité de l'ossature tout au long de la pale depuis sa pointe jusqu'à son emplanture sans avoir recours à des éléments de renfort rapportés.

De manière avantageuse, chaque longeron est constitué par un faisceau de fibres replié sur lui-même autour d'une douille d'attache de la pale sur le moyeu du rotor, disposée à l'extrémité de chacune des branches de la fourche susdite.

Par ailleurs, dans la mesure où la pale comporte au voisinage de son pied une chape d'attache d'un organe de commande (variation de pas) ou d'amortissement, dont chaque branche est pourvue d'une douille d'articulation, il est avantageux de contourner ladite douille par un petit longeron formé d'un faisceau de fibres convenablement orientées, accolé au longeron arrière et incorporé dans l'ossature résistante au caisson sans avoir recours à des pièces rapportées.

On peut egalement incorporer la douille de chacune des branches de la chape susdite à l'ossature de la pale par le moyen d'und rapage de la douille par un empilage de tissus (plis) formant un renfort autour de la douille, s'appuyant sur le longeron arrière du caisson correspondant et recouvert par l'enveloppe de ce caisson.

Le second objet de l'invention réside dans un procédé de fabrication de la pale ci-dessus selon lequel l'assemblage de ses différents éléments constitutifs et la polymérisation des résinés qui les imprègnent sont réalises dans un moule unique constitué de deux demi-moules rigides dont l'empreinte correspond au profil de la pale, chacun d'eux, préalablement à la fermeture du moule étant successivement:

- nappé des couches de peau de la pale et d'une partie des couches de fibres parallèles constituant l'enveloppe du caisson,
- équipé du faisceau de stratifils situé au bord d'attaque et formant longeron avant,
- pourvu du moyen de remplissage du caisson en matériau léger alvéolaire,
- équipé du faisceau de stratifils formant longeron arrière du caisson et de la seconde partie des tissus de fibres parallèles formant l'enveloppe du caisson, l'un d'eux étant également pourvu du matériau de remplissage à l'arrière de l'ossature en caisson, de l'élément en forme de coin assurant la divergence des branches de la fourche susdite et de deux outillages de moulage pour réserver les espaces séparant respectivement les branches de la fourche et celles de la chape susdite.

Selon ce procédé et de manière avantageuse on procède à une première fermeture du moule pour compacter les éléments contenus dans les deux demi-moules, puis à la mise en place d'une coiffe métallique de protection du bord d'attaque et à la fermeture du moule et son chauffage pour assurer la polymérisation des résines d'imprégnation.

L'invention sera mieux comprise au cours de la description donnée ci-après à titre d'exemple non limitatif qui permettra d'en dégager les avantages et les caractéristiques secondaires.

Il sera fait référence aux dessins annexés dans lesquels:

-la figure 1 est une vue générale en plan de la pale selon l'invention partiellement arrachée dans sa partie courante et partiellement coupée au niveau de son emplanture.

- La figure 2 est une coupe partielle de la figure 1 selon la ligne II - II.

- Les figures 3 et 4 sont deux schémas de deux variantes de réalisation de la pale au voisinage de son pied.

- La figure 5 illustre le remplissage du moule de réalisation de la pale par une coupe au niveau de sa section courante.

- La figure 6 montre le moule de la figure 5 fermé.

- La figure 7 illustre un détail de montage au niveau de l'emplanture à fourche de la pale.

- La figure 8 est une section de la partie courante de la pale.

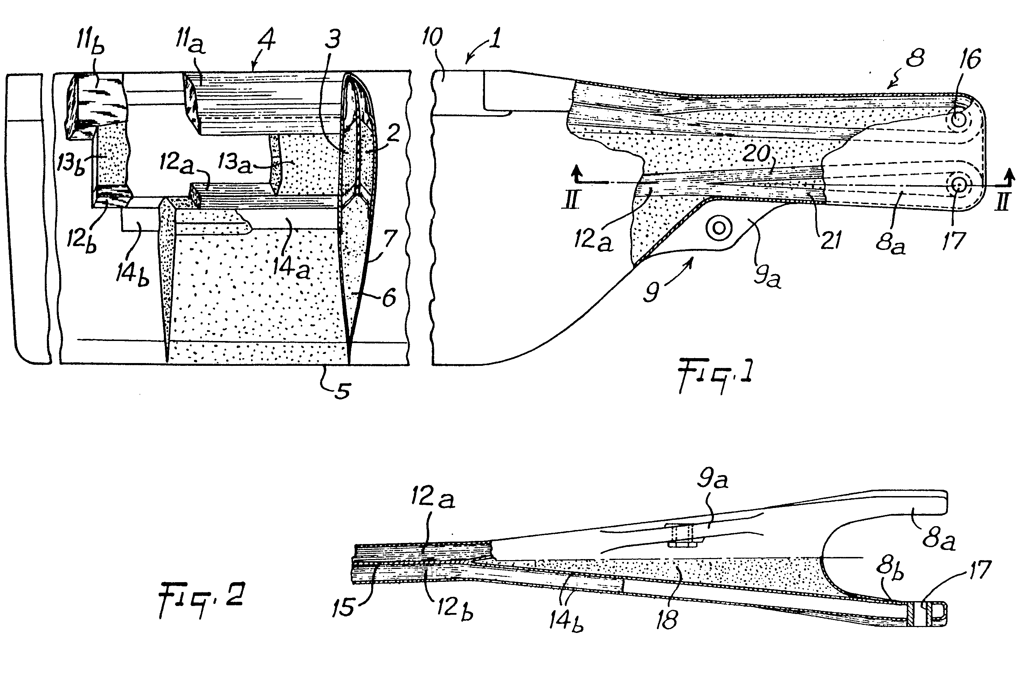

En se reportant tout d'abord à la figure 1 on voit une pale d'hélicoptère 1 en matériau composite selon l'invention dont la section de la partie courante est représentée en détail à la figure 8. Cette pale comporte une ossature résistante formée de deux caissons de torsion 2 et 3 superposés du côté du bord d'attaque 4. Cette ossature est prolongée par une partie arrière voisine du bord de fuite 5 constituée essentiellement par un matériau de remplissage 6 (léger et alvéolaire tel qu'une mousse) l'ossature et le matériau de remplissage étant enfermés dans une enveloppe 7 formant la peau de la pale. Pour son attache à un moyeu de rotor, le pied de la pale est conforme en fourche 8 comportant donc deux branches espacées 8a et 8b (voir figure 2). Elle comporte également, à son pied, une chape 9 formée de deux branches (dont une 9a seulement est visible sur les figures 1 et 2). Elle comporte également une plaque de protection 10 en forme de coiffe de son bord d'attaque 4 par exemple en acier inoxydable.

On voit sur la figure 8 que chacun des caissons 2 et 3 comporte un longeron avant 11a, 11b formé extérieurement au profil du bord d'attaque, en un faisceau de fibres, appelés stratifils, préimprégné de résine de polymérisation, un longeron arrière 12a 12b dans le même matériau et un noyau intermédiaire 13a, 13b (une mousse alvéolaire). L'ensemble des longerons et noyau de chaque caisson est enveloppé dans au moins une couche préimprégnée de résine de tissus 14a, 14b de fibres (verre ou autre) parallèles et dont l'orientation est inclinée par rapport à l'axe longitudinal de la pale. Les couches susdites, dans leur partie jointive forment après polymérisation une paroi unique 15 qui constitue une liaison extrêmement stable des deux caissons entre eux.

On voit sur la figure 1, dans la partie de gauche en écorché le longeron 11a de bord d'attaque du caisson d'extrados, le noyau 13a, le longeron arrière 12a, une portion de l'enveloppe 14a qui remonte comme le montre la figure 8 au niveau de la peau de la pale pour se joindre à une autre extrémité de cette enveloppe. Cet ensemble repose sur la paroi 15 susdite sous laquelle on trouve le longeron 11b du bord d'attaque du caisson d'intrados, le noyau 13b et le longeron arrière 12b. Une portion terminale arrière de l'enveloppe 14b est également représentée, qui reçoit avec la portion terminale arrière de l'enveloppe 14a, la partie la plus épaisse du matériau de remplissage 6.

La partie de droite de la figure 2 représente le pied de pale duquel on a partiellement arraché le revêtement de peau. On voit de ce fait que l'armature de ce pied de pale, donc l'armature de la fourche d'attache 8 qu'il comporte, est constituée par, pour chaque branche de fourche telle que 8a, la prolongation des longerons 11a, 11b et 12a, 12b susdits du caisson correspondant. On remarquera que ces longerons sont en fait chacun constitués par un faisceau de stratifils replié sur lui-même autour d'une douille 16, 17 prévue à l'extrémité des branches de la fourche. Chaque branche de fourche 8a, 8b (voir figure 2) possède une armature qui est la prolongation naturelle de chacun des caissons 2 et 3 de la partie courante de la pale. Il n'y a donc aucune discontinuité de structure entre la partie courante de la pale et sa partie d'attache, la zone de transition étant encore en forme de caisson de torsion tout à fait adapté au passage des efforts.

Sur la figure 2 on voit que les faisceaux 12a et 12b qui sont le long de la partie courante, (de même que les faisceaux 11a et 11b) adjacents à la paroi 15, divergent de chaque côté d'un élément 18 en forme de coin pour former les branches de fourche. Il en est de même pour les enveloppes 14a et 14b qui forment la paroi 15.

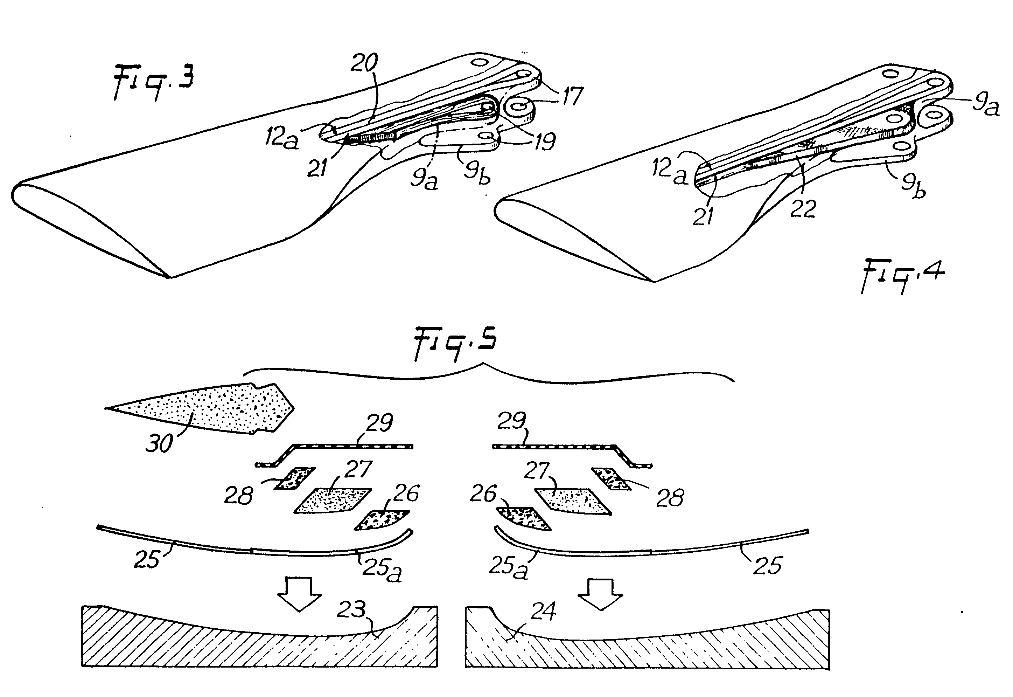

Le schéma de la figure 3 illustre le fait que chaque branche 9a, 9b de la chape 9, qui comporte, de manière connue, une douille d'articulation 19, peut être intégrée au caisson de pied de pale. En effet, un faisceau supplémentaire 20 constitué de fibres repliées autour de la douille 19, est accolé au brin 21 du longeron arrière et la rend solidaire de l'ensemble. Bien entendu, le drapage par tissus de fibres parallèles en biais enveloppe également la douille.

La figure 4 représente une variante de réalisation de la figure 3 dans laquelle les branches de la chape 9 sont constituées par un empilage de tissus préimprégnés conformé en une plaque épaisse 22 qui forme un renfort autour de la douille 19 et s'appuie sur le brin arrière 21 du faisceau 12a de stratifils correspondant. Cet empilage est comme dans la figure précédente, enfermé dans l'enveloppe du caisson.

Les figures 5, 6 et 7 montrent schématiquement les différentes phases du procédé de moulage de la pale selon l'invention. Dans deux demi-moules 23 et 24 on met en place successivement:
- les tissus 25 préimprégnés de revêtement extérieur de la pale formant sa peau 7 avec les couches 25a de tissus à fibres parallèles orientées en biais sur l'axe longitudinal de la pale. (formant une partie des enveloppes 14a et 14b susdites),
- les faisceaux de stratifils 26 également préimprégnés formant respectivement les longerons avant 11a et 11b,
- les pains 27 de mousse alvéolaire taillés au profil désiré qui forment les noyaux 13a et 13b,
- les faisceaux de stratifils 28 préimprégnés formant les longerons arrière 12a, 12b des caissons 2 et 3,
- les couches de tissus de fibres parallèles 29 préimprégnés qui forment la seconde partie des enveloppes 14a et 14b à l'intérieur de la pale et dont la plus grande surface sera réunie par polymérisation en une paroi unique 15 formant semelle médiane pour la pale,
- enfin dans l'un des demi-moules, un pain de mousse 30 qui forme le matériau de remplissage 6.

Avant de fermer le moule on aura également mis en place tous les autres éléments de remplissage nécessaires notamment ceux disposés entre les brins de chaque faisceau au droit des douilles 16 et 17 de la fourche d'attache, l'élément de coin 18 de chaque côté duquel les faisceaux de stratifils divergent, les éléments constituant la chape 9, les inserts métalliques et les pièces mobiles de moulage (noyaux) formant les réserves nécessaires à la constitution des espaces séparant les branches de la fourche 8 et de la chape 9. L'une de ces pièces mobiles de montage est représentée à la figure 7 par la référence 31. Elle sert également au maintien en place de la pièce en coin 18 séparant les deux branches 8a, 8b de la fourche 8.

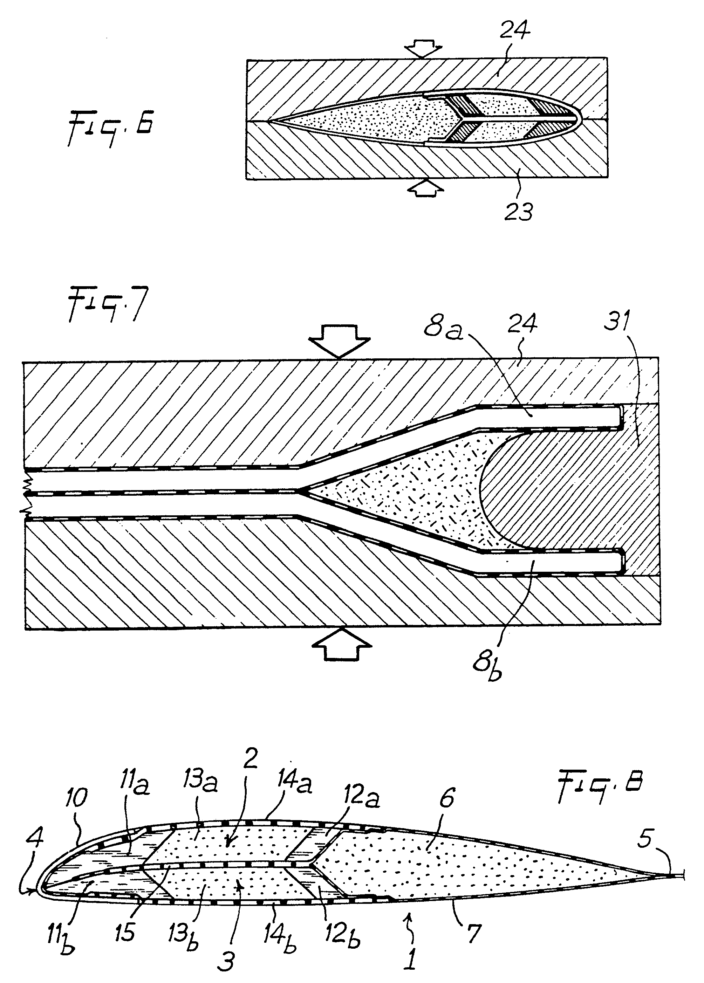

Le moule ainsi équipé est fermé une première fois comme le montre la figure 6 pour procéder à un compactage des divers éléments mis en place. Ouvert ensuite pour y mettre en place la coiffe 10 profilée de protection du bord d'attaque, il est à nouveau fermé pour l'exécution de la polymérisation par apport de chaleur.

La pale obtenue par ce procédé présente de nombreuses qual ités quant à la résistance aux efforts à laquelle elle est soumise car son ossature résistante présente quatre longerons disposés autour de l'axe de pas (qui se situe en général au quart avant de sa corde), trois semelles (extrados, intrados et paroi médiane 15) et des liaisons nombreuses continues et homogènes (exemptes de tout apport de colles ou film de nature différente des résines) entre ces éléments résistants.

L'invention trouve une application intéressante dans le domaine de la construction aéronautique

**Revendications**

1. Pale (1) en matériau composite pour rotor d'hélicoptère, constituée au voisinage de son bord d'attaque par une ossature résistante en caissons (2, 3) sensiblement centrée au quart avant de sa section courante transversale et formée de stratifils en fibres préimprégnées de résine, organisés en faisceaux, ossature à l'arrière de laquelle est dispose un élément de remplissage (6), un revêtement extérieur (7) enveloppant l'ensemble de l'ossature et de l'élément de remplissage, caractérisée en ce que cette ossature comprend deux caissons longitudinaux (2, 3) superposés, chacun d'eux étant constitué par un premier faisceau de stratifils formant un longeron (11a, 11b) avant et par un second faisceau de stratifils formant un longeron (12a, 12b) arrière, par un noyau (13a, 13b) de remplissage en matériau léger disposé entre les deux longerons et par une enveloppe (14a, 14b) renfermant longerons et noyau comprenant au moins une couche de tissus en fibres parallèles, disposees en biais par rapport à l'axe longitudinal de la pale, de manière à former un caisson de torsion, les deux caissons (2, 3) étant solidarisés par polymérisation simultanée des parties (15) superposées et jointives de leur enveloppe respective.

2. Pale selon la revendication 1, caractérisée en ce que, le pied de pale étant prolongé par une emplanture, en forme de fourche (8) à deux branches (8a; 8b) , l'armature de chaque branche de la fourche est constituée par l'extrémité des longerons (11a, 11b, 12a, 12b) de chaque caisson, l'extrémité des longerons du caisson supérieur (2) divergeant angulairement de l'extrémité des longerons du caisson inférieur (3), à une distance appropriée des extrémités des branches de ladite fourche, de part et d'autre d'un matériau de remplissage (18) en forme de coin.

3. Pale selon la revendication 2, caractérisée en ce que le faisceau de stratifils constituant chaque longeron (11a, 11b, 12a, 12b) est replié sur lui-même autour d'une douille (16, 17) d'attache de la pale (1) sur le moyeu du rotor, disposée à l'extrémité de chacune des branches (8a, 8b) de la fourche susdite.

4. Pale selon la revendication 3 caractérisée en ce que, la pale (1) comportant au voisinage de son pied une chape (9) d'attache d'un organe de commande ou d'amortissement dont chaque branche (9a, 9b) est pourvue d'une douille (19) d'articulation, un faisceau supplémentaire (20) entoure ladite douille en étant accolé au brin arrière (21) du longeron arrière ( 12a, 12b) de chaque caisson (2, 3).

5. Pale selon l'une quelconque des revendications 1 à 3, caractérisée en ce que, la pale (1) comportant au voisinage de son pied une chape (9) d'attache d'un organe de commande ou d'amortissement, dont chaque branche (9a, 9b) est pourvue d'une douille (19) d'articulation, chacune des douilles est drapée dans un empilage de tissus (22) de fibres prenant appui contre le longeron (12a, 12b) arrière correspondant et recouvert par l'enveloppe du caisson.

6. Procédé de fabrication d'une pale d'hélicoptère selon l'une quelconque des revendications précédentes, caractérisé en ce que l'assemblage de ses différents éléments constitutifs et la polymérisation des résines qui les imprègnent sont réalisés dans un moule unique constitué de deux demi-moules rigides (23, 24) dont l'empreinte correspond au profil de la pale, chacun d'eux, préalablement à la fermeture du moule, étant successivement
- nappé des couches de peau (25) de la pale et d'une partie (25a) des couches de fibres parallèles constituant l'enveloppe du caisson,
- équipé du faisceau de stratifils (26) situé au bord d'attaque et formant longeron avant (11a, 11b),
- pourvu du noyau de remplissaqe (27) du caisson en matériau léger alvéolaire,
- équipé du faisceau de statifils (28) formant longeron arrière (12a, 12b) du caisson et de la seconde partie (29) des tissus de fibres parallèles formant l'enveloppe du caisson, l'un d'eux étant également pourvu du matériau de remplissage (3b) à l'arrière de l'ossature en caisson, de l'élément en forme de coin (18) assurant la divergence des branches de la fourche susdite et de deux outillages (31) de montage pour réserver les espaces séparant respectivement les branches de la fourche et celle de la chape susdite.

7. Procédé de fabrication selon la revendication 6, caractérisé en ce que l'on procède à une première fermeture du moule pour compacter les éléments contenus dans les deux demi-moules, puis à la mise en place d'une coiffe (10) de protection du bord d'attaque et à la fermeture du moule et son chauffage pour assurer la polymérisation des résines d'imprégnation.

## Patentansprüche

1. Rotorblatt (1) aus Verbundwerkstoff für einen Hubschrauber, das benachbart seiner Vorderkante durch ein festes Gerüst aus Tanks (2, 3) gebildet wird, die im wesentlichen im vorderen Viertel seines laufenden Querschnittes zentriert sind und aus geschichteten, in Bündeln angeordneten, vorab mit Harz getränkten Fasern bestehen, wobei an der Rückseite des Gerippes ein Füllelement (6) angeordnet ist, und eine Aussenumkleidung (7) die Anordnung des Gerippes und des Füllelementes umgibt, <u>dadurch gekennzeichnet</u>, dass das Gerippe zwei übereinanderliegende Längstanks (2, 3) umfasst, von denen jeder durch ein erstes Bündel geschichteter Fasern gebildet wird, die einen vorderen Längsträger (11a, 11b) bilden und durch ein zweites Bündel geschichteter Fasern, die einen hinteren Längsträger (12a, 12b) bilden, ein Füllkern (13a, 13b) aus leichtem Werkstoff zwischen den beiden Längsträgern angeordnet ist und ein Mantel (14a, 14b) die Längsträger und den Füllkern umgibt und mindestens eine Stoffschicht aus parallelen Fasern umfasst, die schräg gegenüber der Längsachse des Rotorblattes liegen, so dass sie einen Torsionstank bilden, und die beiden Tanks (2, 3) durch gleichzeitige Polymerisation der übereinanderliegenden und verbundenen Teile (15) ihres jeweiligen Mantels fest miteinander verbunden sind.

2. Rotorblatt nach Anspruch 1, <u>dadurch gekennzeichnet</u>, dass der Fuss des Rotorblattes durch einen Ansatz in Form einer Gabel (8) mit zwei Schenkeln (8a, 8b) verlängert wird, dass die Armatur eines jeden Schenkels der Gabel aus dem Ende der Längsträger (11a, 11b, 12a, 12b) eines jeden Tanks besteht, und das Ende der Längsträger des oberen Tanks (2) bezüglich der Winkellage gegenüber dem Ende der Längsträger des unteren Tanks (3) um einen Abstand entsprechend den Enden der Schenkel der erwähnten Gabel, beiderseits eines keilförmigen Füllmaterials (18), divergiert.

3. Rotorblatt nach Anspruch 2, <u>dadurch gekennzeichnet</u>, dass das Bündel der geschichteten Fasern, das jeden Längsträger (11a, 11b, 12a, 12b) bildet, zu sich selbst um eine Befestigungsbuchse (16, 17) des Rotorblattes (1) auf der Rotornabe umgeschlagen ist, die sich am Ende eines jeden der Schenkel (8a, 8b) der Gabel befindet.

4. Rotorblatt nach Anspruch 3, <u>dadurch gekennzeichnet</u>, dass das Rotorblatt (1) in der Nähe seines Fusses ein Gabelgelenk (9) zur Befestigung eines Steuerorgans oder Dämpfungsorgans aufweist, und dass jeder Schenkel (9a, 9b) des Gabelgelenkes mit einer Gelenkbuchse (19) ausgestattet ist, und dass ein zusätzliches Bündel (20) die Gelenkbuchse umgibt und mit dem hinteren Strang (21) des hinteren Längsträgers (12a, 12b) eines jeden Tanks (2, 3) verbunden ist.

5. Rotorblatt nach einem der Ansprüche 1 bis 3, <u>dadurch gekennzeichnet</u>, dass das Rotorblatt (1) benachbart seinem Fuss ein Gabelgelenk (9) zur Befestigung eines Steuerorgans oder Dämpfungsorgans trägt, dass jeder Schenkel (9a, 9b) mit einer Gelenkbuchse (19) versehen ist und jede der Gelenkbuchsen von einem Stapel aus Faserstoffen (22) umkleidet ist, die sich gegen den zugeordneten hinteren Längsträger (12a, 12b) abstützen, und der Stapel durch die Tankumhüllung abgedeckt ist.

6. Verfahren zur Herstellung eines Rotorblattes eines Hubschraubers nach einem der vorhergehenden Ansprüche, <u>dadurch gekennzeichnet</u>, dass der Zusammenbau der verschiedenen Bestandteile des Rotorblattes und die Polymerisation der Harze für die Tränkung in einer einzigen Form erfolgen, die durch zwei starre Halbformen (23, 24) gebildet wird, deren Abguss dem Profil des Rotorblattes entspricht, und wovon jede vor dem Schliessen der Form aufeinanderfolgend:
- mit Aussenschichten (25) des Rotorblattes und einem Teil (25a) der Schichten aus parallelen Fasern abgedeckt wird, die den Mantel des Tanks bilden,
- mit den Bündeln beschichteter Fasern ausgestattet wird, die an der Vorderkante liegen und die Längsträger (11a, 11b) bilden,
- mit dem Füllkern (27) des Tanks aus leichtem, zellenförmigem Werkstoff versehen wird,
- mit dem Bündel geschichteter Fasern (28), die den hinteren Längsträger (12a, 12b) des Tanks bilden und mit dem zweiten Teil (29) der Stoffe aus parallelen Fasern ausgestattet wird, die den Mantel des Tanks bilden, wobei eine der Halbformen gleichfalls mit dem Füllmaterial am Heck des tankförmigen Gerippes, dem keilförmigen Elementes (18) versehen wird, das die Divergenz der Schenkel der erwähnten Gabel bildet, sowie mit zwei Montageausrüstungen (31), um die Räume zu reservieren, die jeweils die Schenkel der Gabel und jene des Gabelgelenkes trennen.

7. Herstellungsverfahren nach Anspruch 6, <u>dadurch gekennzeichnet</u>, dass man ein erstes Schliessen der Form vornimmt, um die in den beiden Halbformen enthaltenen Elemente zu verdichten, dann eine Schutzabdeckung (10) für die Vorderkante einsetzt und das Schliessen der Form und deren Aufheizung vornimmt, um die Polymerisation der Tränkharze zu gewährleisten.

## Claims

1. Composite helicopter rotor blade (1), constituted in the proximity of its leading edge by a strong, box-type framework (2, 3) substantially centred on the front quarter of its running cross-section and formed by resin-preimpregnated fibre rovings, organised into bundles, there being disposed to the rear of said framework a filler member (6), an outer cover (7) enveloping the assemblage comprising the framework and the filler member, characterised in that said framework comprises two superposed longitudinal boxes (2, 3), each of which is constituted by a first bundle of rovings forming a front spar (11a,11b) and by a second bundle of rovings forming a rear spar (12a, 12b), by an infilling core member (13a, 13b) of lightweight material disposed between the two spars, and by a shell (14a, 14b) enclosing the spars and the core and comprising at least one fabric layer made up of parallel fibres disposed slantwise with respect to the longiditudinal axis of the blade so as to form a torsion box, the two boxes (2, 3) rendered fast by simultaneous polymerization of the superposed and contiguous portions (15) of their respective shell.

2. Blade according to claim 1, characterised in that, the blade root being prolonged by a root end fitting in the shape of a fork (8) with two prongs (8a, 8b), the armature of each prong of the fork is constituted by the tip of the spars (11a, 11b, 12a, 12b) of each box, the tip of the spars of the upper box (2) diverging at an angle from the tip of the spars of the lower box (3), at a suitable distance from the tips of the prongs of said fork, on either side of a wedge-shaped filler material (18).

3. Blade according to claim 2, characterised in that the bundle of rovings which makes up each spar (11a, 11b, 12a, 12b) is folded back upon itself around a sleeve (16, 17) attaching the blade (1) to the rotor hub, said sleeve being disposed at the tip of each of the prongs (8a, 8b) of the aforementioned fork.

4. Blade according to claim 3, characterised in that, the blade (1) comprising in the proximity of its root a yoke (9) for attaching a control or dampening device, each prong (9a, 9b) of the yoke being equipped with an articulation sleeve (19), an additional bundle (20) surrounds said sleeve and is attached to the rear ply (21) of the rear spar (12a, 12b) of each box (2, 3).

5. Blade according to any one of claims 1 to 3, characterised in that, the blade (1) comprising in the proximity of its root a yoke (9) for attaching a control or dampening device, each prong (9a, 9b) of said yoke being equipped with an articulation sleeve (19), each of the sleeves is muffled in a series of layers of filament materials (22) abutting the corresponding rear spar (12a, 12b) and covered by the shell of the box.

6. Method of fabricating a helicopter blade according to any one of the preceding claims, characterised in that the assembling of its various component parts and the polymerization of the resins with which they are impregnated are carried out in a single mould constituted by two rigid mould halves (23, 24) the cavity of which corresponds to the blade airfoil section, and each of said mould halves, preferably at the time the mould is closed, being in succession
- coated with the skin layers (25) of the blade and with a portion (25a) of the layers of parallel filaments which make up the shell of the box,
- furnished with the bundle of rovings (26) positioned on the leading edge and forming the front spar (11a, 11b),
- provided with the infilling core (27) of the box made of lightweight honeycomb material,
- furnished with the bundle of rovings (28) forming the rear spar (12a, 12b) of the box and with the second portion (29) of the parallel filament materials forming the shell of the box, one of said mould halves also being provided with the filler material (3b) at the rear of the box-type framework, with the wedge-shaped member (18) assuring the divergence of the prongs of the aforementioned fork, and with two mounting tools (31) for reserving the spaces respectively separating the prongs of the fork and that of the aforementioned yoke.

7. Fabrication method according to claim 6, characterised by proceeding to a first closure of the mould for compacting the members contained in the two mould halves, then to the positioning of a cover (10) to protect the leading edge, and to closure of the mould and heating thereof to assure the polymerization of the impregnating resins.

Fig.1

Fig.2

0 187 590

Fig.3

Fig.4

Fig.5

Fig. 6

24

23

Fig. 7

8a    24    31

8b

Fig. 8

10   11a   13a   2   14a   12a   6

4

5

11b   15   13b   3   14b   12b   7

1